# EUROPEAN PATENT APPLICATION

(11) **EP 4 287 301 A1**
(43) Date of publication of application: **06.12.2023**
(21) Application number: 22745800.7
(22) Date of filing: 24.01.2022
(51) Int. Cl.: H01M 4/131, H01M 4/1391, H01M 4/36, H01M 4/505, H01M 4/525, H01M 10/0567

(54) **NONAQUEOUS ELECTROLYTE SECONDARY BATTERY AND METHOD FOR MANUFACTURING SAME**

(30) Priority: 29.01.2021 JP 2021013965
(71) Applicant: Panasonic Intellectual Property Management Co., Ltd., Osaka 571-0057 (JP)
(72) Inventor: SAKAI Masahiro, Kadoma-shi, Osaka 571-0057 (JP); TSUJITA Takuji, Kadoma-shi, Osaka 571-0057 (JP)
(74) Representative: Novagraaf International SA
(86) International application number: PCT/JP2022/002436
(87) International publication number: WO 2022/163579

(57) **Abstract**

A non-aqueous electrolyte secondary battery including a positive electrode, a negative electrode, and a non-aqueous electrolyte, wherein the positive electrode includes positive electrode active material particles, the positive electrode active material particles include a composite oxide containing lithium and a transition metal, and a cover material covering at least a portion of a surface of the composite oxide, and the cover material includes a metal oxide, and a phosphorus compound covering at least a portion of a surface of the metal oxide.

## Description

### [Technical Field]

The present invention relates to a non-aqueous electrolyte secondary battery and a production method thereof.

### [Background Art]

Non-aqueous electrolyte secondary batteries represented by lithium ion secondary batteries have a high energy density and a high output, and expected to be promising as a power supply of mobile devices such as smart-phones, a power source of a vehicle such as an electric vehicle, and a storage device of natural energy such as sunlight. As the positive electrode active material of a non-aqueous electrolyte secondary battery, for example, a composite oxide containing lithium and a transition metal is used.

Meanwhile, Patent Literature 1 has proposed, "a positive electrode active material for a lithium ion secondary battery composed of particles (III) having a cover layer containing a metal oxide (I) including at least one metal element selected from the group consisting of Group 3 of periodic table, Group 13 of periodic table, and lanthanoids at a surface of a lithium-containing composite oxide including lithium and a transition metal element, and a compound (II) including Li and P, wherein the atomic ratio (P/metal element) of the P and the metal element included within 5 nm of the surface layer of the particles (III) is 0.03 to 0.45".

Patent Literature 1 has also proposed "a method for producing a positive electrode active material for a lithium ion secondary battery, the method including a first contact step, in which a powder of a lithium-containing composite oxide including lithium and a transition metal element is brought into contact with a first aqueous solution including cation having at least one metal element selected from the group consisting of Group 3 of periodic table, Group 13 of periodic table, and lanthanoids; a second contact step in which the powder of a lithium-containing composite oxide is brought into contact with a second aqueous solution including anion having P and not including cation having the metal element; and a heating step, in which after the first contact step and the second contact step, the produced lithium-containing composite oxide powder is heated to 250 to 700°C, wherein in the entire aqueous solution combining the first aqueous solution and the second aqueous solution, |(the number of moles of anions included in the second aqueous solution × valency of the anion) |/(the number of moles of cations included in the first aqueous solution × valency of the cation) is less than 1".

### [Citation List]

### [Patent Literature]

PLT1:WO2013/047877

### [Summary of Invention]

### [Solution to Problem]

The cover layer of Patent Literature 1 is formed by, after allowing the composite oxide to bring into contact with the cation and the anion by a liquid phase method, heating to 250 to 700°C. In such a method, the cation and the anion are formed into a composite complicatedly, and therefore the structural adjustment of the cover layer is difficult, and cycle characteristics may be reduced unintentionally.

### [MEANS FOR SOLVING THE PROBLEM]

In view of the above, an aspect of the present invention relates to a non-aqueous electrolyte secondary battery including a positive electrode, a negative electrode, and a nonaqueous electrolyte, wherein the positive electrode includes positive electrode active material particles, the positive electrode active material particles include a composite oxide containing lithium and a transition metal, and a cover material covering at least a portion of a surface of the composite oxide, and the cover material includes a metal oxide, and a phosphorus compound covering at least a portion of a surface of the metal oxide.

Another aspect of the present invention relates to a method for producing a non-aqueous electrolyte secondary battery, the non-aqueous electrolyte secondary battery including a positive electrode, a negative electrode, and a non-aqueous electrolyte, and the method including the steps of: (1A) forming a positive electrode mixture layer including a composite oxide containing lithium and a transition metal on a surface of a positive electrode current collector, (1B) allowing a metal oxide to adhere to at least a portion of a surface of the composite oxide in the positive electrode mixture layer to produce a positive electrode intermediate by an atomic layer deposition method and the like, and (2) bringing a phosphate compound into contact with a surface of the metal oxide, to form a cover material including the metal oxide, and a phosphorus compound covering at least a portion of a surface of the metal oxide, to produce a positive electrode.

Still another aspect of the present invention relates to a method for producing a nonaqueous electrolyte secondary battery, the non-aqueous electrolyte secondary battery including a positive electrode, a negative electrode, and a non-aqueous electrolyte, and the method including the steps of: (1a) allowing a metal oxide to adhere to at least a portion of a surface of a composite oxide containing lithium and a transition metal by a sputtering method and the like, (1b) forming a positive electrode mixture layer including the composite oxide to which the metal oxide is adhered on a surface of a positive electrode current collector to produce a positive electrode intermediate, and (2) bringing a phosphate compound into contact with a surface of the metal oxide to form a cover material including the metal oxide, and a phosphorus compound covering at least a portion of a surface of the metal oxide, to produce a positive electrode.

### [Effects of Invention]

The present invention allows for improvement in cycle characteristics of non-aqueous electrolyte secondary batteries.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG.1] FIG.1 is a partially cutaway oblique view of a non-aqueous electrolyte secondary battery in an embodiment of the present invention.
[FIG.2] FIG.2 is a TEM image of a cross section of a first region of a positive electrode active material particle, region (a) showing a surface of a composite oxide, region (b) showing a metal oxide of a cover material, and region (c) showing a phosphorus coating of the cover material.
[FIG.3] FIG.3 is a diagram showing amounts of phosphorus detected in an EDX analysis in the first region, MO.
[FIG.4] FIG.4 is a TEM image of a cross section of a second region of the positive electrode active material particle, region (a) showing a surface of the composite oxide, and region (b) showing a region where a binder is present.
[FIG. 5] FIG. 5 is a diagram showing amounts of phosphorus detected in an EDX analysis in the second region, MS.

### [Description of Embodiments]

A non-aqueous electrolyte secondary battery in an embodiment of the present invention includes a positive electrode, a negative electrode, and a non-aqueous electrolyte. The positive electrode includes positive electrode active material particles. The positive electrode active material particles include a composite oxide containing lithium and a transition metal (hereinafter, referred to as "composite oxide A"), and a cover material covering at least a portion of a surface of the composite oxide.

The cover material includes a metal oxide (hereinafter, also referred to as a "metal oxide B"), and a phosphorus compound covering at least a portion of a surface of the metal oxide B. In the following, the phosphorus compound covering at least a portion of a surface of the metal oxide B is also referred to as a "phosphorus coating". The structure of the phosphorus coating is not particularly limited, and the presence of the phosphorus coating can be checked by detecting P elements.

The composite oxide A is a portion where a capacity is brought out by charging/discharging of lithium ions (positive electrode active material portion). Meanwhile, the cover material or metal oxide B is an additive for the positive electrode active material, and itself does not have to bring out the capacity. That is, the composite oxide A is different from the metal oxide B.

The cover material has a layered structure. The metal oxide B is adhered to a surface of the composite oxide A. The phosphorus coating is adhered to a surface of the metal oxide B. The phosphorus coating is derived, for example, from a phosphorus compound included in the non-aqueous electrolyte. The phosphorus compound included in the non-aqueous electrolyte may be a phosphate compound. By the phosphorus compound adhering to a surface of the metal oxide B (or reacting with the surface of the metal oxide B), at least a portion of the surface of the metal oxide B is covered with the phosphorus coating. The phosphorus coating may be a part of the phosphorus compound included in the non-aqueous electrolyte, or a part of the residue of the phosphorus compound included in the non-aqueous electrolyte.

The phosphorus compound included in the non-aqueous electrolyte may be a phosphate compound having at least one alkenyl group in one molecule. In the following, the phosphate compound having at least one alkenyl group in one molecule is also referred to as a compound A. The compound A has high affinity with the surface of the metal oxide B.

The metal oxide B and the phosphorus coating both have functions to protect the surface of the composite oxide A and restrict side reactions (hereinafter, referred to as "protection functions"), and functions to suppress elution of metal from the composite oxide A (hereinafter, referred to as "elusion suppression functions"). The protection functions and elusion suppression functions both contribute to improvement in cycle characteristics.

By the phosphorus coating adhering to the surface of the metal oxide B to protect the metal oxide B, the above-described functions of the metal oxide B are presumably brought out continuously during charge/discharge cycles. Meanwhile, the phosphorus coating can be stably present on the surface of the composite oxide B through the metal oxide B, and therefore the above-described functions of the phosphorus coating can be sufficiently and continuously brought out. Thus, cycle characteristics are improved.

When the metal oxide B and the phosphorus coating are used in combination, the metal oxide B necessary for increasing the coverage of the surface of the composite oxide A with the cover material can be in a small amount compared with the case where only the metal oxide B is used as the cover material. The thickness of the metal oxide B adhered to the surface of the composite oxide A can be sufficiently thin. The above-described cover material can be configured with a small amount of the metal oxide B and a small amount of the phosphorus coating. An increase in an internal resistance due to such a cover material is insignificant.

The surface of the composite oxide A may have a first region covered with the metal oxide B of an island state, and a second region other than the first region. The second region may not be covered with the metal oxide B, and a smaller amount of metal oxide B than that of the first region can be detected. In the second region, entry and release of lithium ions to and from the composite oxide A are more easily done than in the first region. The second region contributes to further decrease in the internal resistance.

When the metal oxide B is detected in the second region, the amount of metal included in the metal oxide B detected in the first region, MA, and the amount of metal included in the metal oxide B detected in the second region, MB, satisfies the relation MA> MB, and may satisfy the relation MA> 2MB, or MA> 3MB. The quantitative relation described above of MA and MB can be determined based on the ratio of the presence of metal atoms included in the metal oxide B.

The first region may be scattered on the surface of the composite oxide A. That is, the surface of the composite oxide A may be covered with the metal oxide B of an island state scattered thereon. By the scattered presence of the metal oxide B of an island state throughout or homogenously on the surface of the composite oxide A, the protection functions and elusion suppression functions of the cover material can be easily brought out to the entire surface of the composite oxide A. Similarly, the effects of decreasing the internal resistance by the second region can also be easily brought out throughout the entire surface of the composite oxide A.

The compound A tends to cover the surface of the metal oxide B with priority or selectively to form a phosphorus coating, and therefore it does not tend to cover the second region with the phosphorus coating. The second region does not need to be covered with the phosphorus coating.

When the second region is covered with the phosphorus coating, the amount of phosphorus detected on the surface of the metal oxide B (that is, first region), MO, and the amount of phosphorus detected in the second region, MS, may satisfy the relation MO > MS. MO > 2MS may be satisfied, or further MO > 3MS may be satisfied. The quantitative relation described above of MO and MS can be determined based on the ratio of the presence of phosphorus atoms included in the phosphorus coating.

Distinction of the first region from the second region, the distribution status of the metal oxide B at the surface of the composite oxide A, the quantitative relation between MA and MB (ratio of MA to MB), the distribution status of phosphorus, and the quantitative relation of MO and MS (ratio of MO to MS) can be checked or quantitatively determined, for example, by performing elemental analysis or element mapping on cross sections of the positive electrode or positive electrode active material particles, using an electron probe micro analyzer (EPMA), energy dispersive X-ray spectroscopy (EDX), X-ray photoelectron spectroscopy (XPS), etc.

Based on an elemental analysis at the outermost surface of the positive electrode mixture, the atomic ratio of the metal derived from the metal oxide B (MY) relative to the metal derived from the composite oxide A (MX): MY/MX is preferably, for example, 2 or less. In this case, it can be assumed that at the surface of the composite oxide A, a thin layer of the metal oxide B (e.g., thickness 1 nm or more and 3 nm or less) is distributed in an island state.

### (Compound A)

The compound A is phosphate (organic phosphoric acid) having at least one alkenyl group in one molecule. The compound A may be mixed into a non-aqueous electrolyte used for the battery. By using the non-aqueous electrolyte including the compound A to produce a battery, a phosphorus coating can be easily formed on a surface of the metal oxide B covering the surface of the composite oxide A.

Preferably, the carbon-carbon double bond of the alkenyl group is near the distal end of the alkenyl group. Such a compound A is assumed to be highly interactive with the metal oxide B. The number of carbon atoms of the alkenyl group may be, for example, 2 or more and 5 or less. In this case, the compound A can easily dissolve in the non-aqueous electrolyte, and the compound A may easily adhere to the surface of the metal oxide B. The viscosity of the nonaqueous electrolyte including the compound A can be made suitably low. Based on the same viewpoint, the alkenyl group preferably is a straight chain. When the compound A has a plurality of alkenyl groups, the plurality of alkenyl groups may be the same or different from each other.

The alkenyl group may be, to be specific, at least one selected from the group consisting of a vinyl group, a 1-propenyl group, a 2-propenyl group (allyl group), an isopropenyl group, a 1-butenyl group, a 2-butenyl group, and a 3-butenyl group. In particular, for the alkenyl group, at least one of an allyl group and a 3-butenyl group is preferable, and an allyl group is more preferable.

The compound A has, for example, a structure represented by a formula (I) below.

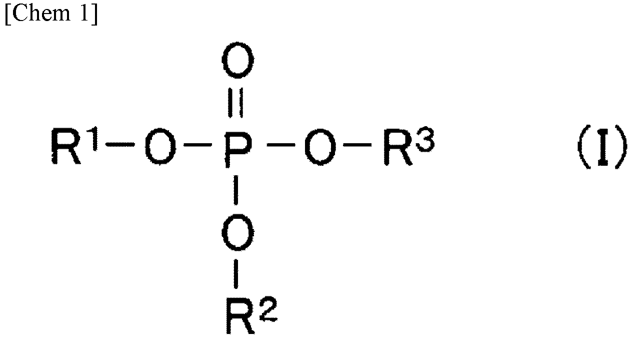

In the formula (I), at least one of R¹, R², and R³ is an alkenyl group. Preferably, all of R¹, R², and R³ is an alkenyl group. When the compound A represented by the formula (I) has a plurality of alkenyl groups, the plurality of alkenyl groups may be the same or different. A portion of hydrogen atoms included in the alkenyl group may be replaced with another atom or a group (e.g., halogen atom such as chlorine atom). The number of carbon atoms of the alkenyl group may be, for example, 2 or more and 5 or less. The alkenyl group may be a straight chain or a branched chain. The alkenyl group may have a structure represented by CH₂ = CH-(CH₂)ₙ-. N may be 0 or more and 3 or less, n = 1 is more preferable.

In the formula (I), one or two of R¹, R², and R³ may be a hydrocarbon group other than the alkenyl group. The hydrocarbon group other than the alkenyl group may be an alkyl group. A portion of the hydrogen atoms included in the hydrocarbon group other than the alkenyl group (alkyl group, etc.) may be replaced with other atoms or groups (e.g., halogen atom such as chlorine atom). When the compound A represented by the formula (I) has two hydrocarbon groups other than the alkenyl group, the hydrocarbon group other than the alkenyl group may be the same or different. The number of carbon atoms of the alkyl group is, for example, 2 or more and 5 or less. The alkyl group may be a straight chain or a branched chain. The alkyl group may be a methyl group, ethyl group, propyl group, etc.

The compound A includes, for example, at least one selected from the group consisting of phosphoric acid monoester, phosphoric acid diester, and phosphoric acid triester. In particular, phosphoric acid triester is preferable. Preferably, 50 mass% or more of the compound A is phosphoric acid triester, or 70 mass% or more, or 90 mass% or more of the compound A is phosphoric acid triester.

Preferably, phosphoric acid triester includes triallyl phosphate. Triallyl phosphate easily dissolves in the non-aqueous electrolyte, and a non-aqueous electrolyte with a lower viscosity can be prepared. Preferably, 50 mass% or more of the phosphoric acid triester is triallyl phosphate, or 70 mass% or more, or 90 mass% or more of the phosphoric acid triester is triallyl phosphate.

The content of the compound A in the non-aqueous electrolyte is 2 mass% or less, 0.25 mass% or more and 2 mass% or less, 0.25 mass% or more and 1.5 mass% or less, or 0.25 mass% or more and 1.3 mass% or less. For example, in preparation (before injection into a battery) of the non-aqueous electrolyte, the compound A may be contained within the above-described range. In this case, cycle characteristics easily improve.

When the compound A is contained by 2 mass% or less in preparation of the nonaqueous electrolyte, the non-aqueous electrolyte in an initial battery (e.g., after injection of nonaqueous electrolyte or after several charges/discharges) may contain the compound A of, for example, 1 mass% or less, 100 ppm or less, or a trace amount near the detection limit. When the presence of the compound A can be confirmed in the non-aqueous electrolyte of the battery, it can be assumed that the compound A is adhered to the surface of the metal oxide B to some extent. The amount of the compound A contained in the non-aqueous electrolyte can be determined by gas chromatography mass spectrometry (GC/MS).

### (Metal oxide B)

The metal included in the metal oxide B may be at least one selected from the group consisting of, for example, aluminum, silicon, titanium, magnesium, zirconium, niobium, germanium, calcium, and strontium. The metal oxide B may be, for example, at least one selected from the group consisting of aluminum oxide (e.g., Al₂O₃ or silica alumina), silicon oxide (e.g., SiO₂), titanium oxide (e.g., TiO₂), magnesium oxide (e.g., MgO), zirconium oxide (e.g., ZrO₂), niobium oxide, germanium oxide, calcium oxide, and strontium oxide.

In particular, the metal oxide B preferably includes at least one selected from the group consisting of aluminum oxide, silicon oxide, and silica alumina. These are low in costs, and excellent in chemical stability and thermal stability.

The thickness of the metal oxide B adhered to the surface of the composite oxide A is, for example, in a range of 1 nm or more and 5 nm or less. When the thickness of the metal oxide B is 5 nm or less, lithium ions tend to smoothly migrate between the composite oxide A and the non-aqueous electrolyte, and the internal resistance can be kept small. The thickness of the metal oxide B may be 1 nm or more and 3 nm or less.

### (Composite oxide A)

The composite oxide A is a portion that exhibits a capacity as a positive electrode active material. The composite oxide A contains lithium and a metal other than lithium. The metal other than lithium includes at least a transition metal, and may include a metal other than transition metal. The transition metal may include, for example, at least one selected from the group consisting of Ni, Co, Mn, Fe, Cu, Cr, Ti, Nb, Zr, V, Ta, and Mo. The metal other than transition metal may include, for example, at least one selected from the group consisting of, Al, Mg, Ca, Sr, Zn, and Si.

The composite oxide A may be obtained by, for example, mixing a lithium compound with a compound including a metal other than lithium obtained by a coprecipitation method and the like, and baking them under predetermined conditions.

The composite oxide A includes, for example, secondary particles of a plurality of coagulated primary particles. The primary particles have a particle size of generally 0.05 µm or more and 1 µm or less. The secondary particles have an average particle size of, for example, 3 µm or more and 30 µm or less, and 5 µm or more and 25 µm or less.

In the present specification, the average particle size means a particle size (volume average particle size) having a volume integrated value of 50% in the particle size distribution measured by the laser diffraction scattering method. Such an average particle size may be referred to as D50.

In view of obtaining a high capacity, the transition metal preferably includes at least Ni. Ni is lower in costs compared with Co, and advantageous in terms of obtaining a high capacity. The atomic ratio of Ni relative to the entire metal other than lithium is, for example, 0.3 or more and less than 1, 0.5 or more and less than 1, or 0.75 or more and less than 1.

The composite oxide A may have a layered rock salt type structure. The composite oxide A may include Ni, Co, and at least one of Al and Mn. At this time, at an outermost surface of the positive electrode mixture, the atomic ratio of the metal derived from the metal oxide B relative to Ni derived from the composite oxide A may be 2 or less. For example, when the surface of the composite oxide A is covered with a cover material Al₂O₃, at an outermost surface of the positive electrode mixture, the atomic ratio of Al derived from Al₂O₃ relative to Ni derived from the composite oxide A: Al/Ni may be 2 or less. In this case, it can be assumed that at the surface of the composite oxide A, a thin layer of the metal oxide B is distributed in an island state.

The amount of element contained and composing the composite oxide A can be determined by an inductively coupled plasma atomic emission spectroscopy device (ICP-AES), EPMA, EDX, etc.

### (Method of covering the surface of the composite oxide A with a cover material)

The method of covering the surface of the composite oxide A with a cover material includes, for example, a first step of covering the surface of the composite oxide A with the metal oxide B, and a second step of covering the surface of the metal oxide B with a phosphorus coating. The first step may be a step of forming a first region of an island state scattered on the surface of the composite oxide A. In this case, the surface of the composite oxide A has a second region not covered with the metal oxide B. The second step may be a step of allowing the compound A or its residue to adhere to the surface of the metal oxide B.

### (First step)

For the method of covering the surface of the composite oxide A with the metal oxide B, a liquid phase method or a gas phase method can be used. Examples of the liquid phase method include a wet method, spray coating method, dip coating method, etc. Examples of the gas phase method include a chemical vapor deposition (CVD) method, atomic layer deposition (ALD) method, and sputtering method.

### (First method)

The first step includes, for example, a step (1A) of forming a positive electrode mixture layer including a composite oxide A on the surface of the positive electrode current collector, and a step (1B) of allowing the metal oxide B to adhere to at least a portion of the surface of the composite oxide A in the positive electrode mixture layer to produce a positive electrode intermediate.

In the step (1A), for example, a positive electrode slurry in which the positive electrode mixture is dispersed in a dispersion medium is applied on a surface of a positive electrode current collector, the coated film is dried, and rolled as necessary, to form a positive electrode mixture layer. The positive electrode mixture layer may be formed on one surface of the positive electrode current collector, or may be formed on both surfaces thereof. The positive electrode mixture includes at least the composite oxide A, and may further include a binder, conductive agent, etc. Examples of the dispersion medium include N-methyl-2-pyrrolidone (NMP).

Examples of the binder include resin materials such as, for example, fluororesin, polyolefin resin, polyamide resin, polyimide resin, acrylic resin, and vinyl resin. Examples of the fluororesin include polytetrafluoroethylene (PTFE), and polyvinylidene fluoride (PVDF).

Examples of the conductive agent include carbon black, carbon fiber, metal fiber, and carbon fluoride.

As the positive electrode current collector, for example, a metal foil can be used. As a metal composing the positive electrode current collector, for example, aluminum, titanium, alloys containing these metal elements, stainless steel, and the like can be used. The thickness of the positive electrode current collector is not particularly limited, but is, for example, 3 to 50 µm.

In the step (1B), a wet method, spray coating method, dip coating method, chemical vapor deposition (CVD) method, atomic layer deposition (ALD) method, sputtering method, etc. may be used to allow the metal oxide B to adhere to the surface of the composite oxide A. For example, with the ALD method, the metal oxide may be adhered to the surface of the composite oxide. Generally, a gas phase method such as CVD is performed under temperature conditions of 400 to 900°C, while the ALD method can be performed under temperature conditions of 100 to 400°C. That is, the ALD method is excellent in that thermal damages to the electrode can be suppressed.

The ALD method is a film forming method in which a raw material gas (precursor) including a metal (such as Al) and an oxidizer are alternately supplied into a reaction chamber with an object placed therein, so that a metal oxide can be formed on a surface of the object. In the ALD method, self-limiting works, and therefore the metal oxide is deposited on the surface of the object by an atomic layer.

In the ALD method, the film forming conditions are controlled to allow the metal oxide B of an island state to scatter on the surface of the composite oxide A. For example, the amount of deposition of the metal oxide B is controlled by the number of cycles, setting the following as 1 cycle: the supply of the raw material gas → exhaust (purge) of the raw material gas → supply of oxidizer→ exhaust (purge) of the oxidizer. By limiting the amount of the deposition of the metal oxide B (in other words, making the metal oxide B thinner), the metal oxide B of an island state can be formed so as to be scattered on the surface of the composite oxide A.

Examples of the oxidizer used in the ALD method include water, oxygen, and ozone. The oxidizer may be supplied to the reaction chamber as a plasma using an oxidizer as a raw material.

As the precursor, various types of organometallic compound conventionally used in the ALD method can be used. Examples of the precursor including Al include trimethyl aluminum ((CH₃)₃Al), triethyl aluminum ((CzHs)sAl), etc.

### (Second method)

The first step may include, for example, a step (1a) of allowing a metal oxide B to adhere to at least a portion of a surface of the composite oxide A, and a step (1b) of forming a positive electrode mixture layer including a composite oxide A to which the metal oxide B was allowed to adhere on the surface of the positive electrode current collector to produce a positive electrode intermediate.

In the step (1a), a wet method, spray coating method, dip coating method, chemical vapor deposition (CVD) method, sputtering method, etc. may be used to allow the metal oxide B to adhere to the surface of the composite oxide A. The step (1a) includes, for example, a step (1a-1) of allowing a raw material solution to adhere to the surface of the composite oxide A, and a step (1a-2) of heating and drying the composite oxide A to which the raw material solution is adhered on its surface. The step (1a-1) is a step of, for example, adding the composite oxide A to the raw material solution, and stirring to disperse. The step (1a-2) is a step of removing the dispersion medium adhered to the surface of the composite oxide A by heating and drying, the step also serving as a step of allowing the raw material adhered on the surface of the composite oxide A to react to produce the metal oxide B.

For the raw material solution, for example, an aqueous solution including the raw material is used. For the raw material, a compound capable of producing the metal oxide B by decomposition reaction by heating can be used. For such a compound, for example, a metal salt of organic acid such as citric acid, maleic acid, lactic acid, an organic metal complex, etc. are used. By limiting the amount of the raw material included in the raw material solution, the metal oxide B of an island state is formed so as to scatter on the surface of the composite oxide A.

In the step (1b), in the same manner as in the step (1A), a positive electrode slurry is prepared, and the positive electrode slurry is applied to the surface of the positive electrode current collector, the coating is dried, and rolled as necessary to form a positive electrode mixture layer.

### (Second step)

The second step is a step of bringing the compound A into contact with the surface of the metal oxide B to form a cover material including the metal oxide B and a phosphorus coating covering at least a portion of the surface of the metal oxide B to produce a positive electrode. The second step includes, for example, a step (2A) of preparing a non-aqueous electrolyte including the compound A, and a step (2B) of bringing the non-aqueous electrolyte including the compound A into contact with the composite oxide A with its surface covered with the metal oxide B. In the step (2B), the compound A having a high affinity with the metal oxide B is adhered to or reacts with the surface of the metal oxide B with priority or selectively.

In the step (2B), for example, an electrode group is formed, in which the positive electrode intermediate produced in the step (1B) or the step (1b), a negative electrode, and a separator interposed between the positive electrode intermediate and the negative electrode are included, and the electrode group may be brought into contact with the non-aqueous electrolyte. For example, the electrode group may be accommodated in a battery case, and the non-aqueous electrolyte is injected into the battery case to which the electrode group is accommodated, and the opening of the battery case is sealed with a sealing plate to assemble a battery.

As described above, when the phosphorus coating is formed with the compound A after forming the positive electrode mixture layer, contact points among the composite oxide A are easily formed, and the conductive network among the composite oxide A can be easily secured.

In the following, the configuration of the non-aqueous electrolyte secondary battery is described in more detail.

### (Positive Electrode)

The positive electrode includes, for example, a positive electrode current collector, and a positive electrode mixture layer supported on a surface of the positive electrode current collector. The positive electrode mixture layer includes positive electrode active material particles as an essential component. The positive electrode active material particles have a composite oxide A, and a cover material adhered to a surface of the composite oxide A.

### (Negative Electrode)

The negative electrode includes at least a negative electrode current collector, and may include a negative electrode mixture layer supported on a surface of the negative electrode current collector. That is, the non-aqueous electrolyte secondary battery may be a lithium secondary battery (lithium metal secondary battery) in which lithium metal deposits during charging and dissolves during discharging in the negative electrode, or may be a lithium ion secondary battery that involves storage and release of lithium ion s during charging/discharging.

The negative electrode mixture layer can be formed, for example, by applying a negative electrode slurry in which a negative electrode mixture is dispersed in a dispersion medium to a surface of a negative electrode current collector, drying the coating, and as necessary rolling. The negative electrode mixture layer may be formed on one surface of the negative electrode current collector, or on both surfaces thereof. As the dispersion medium, for example, water or NMP is used.

The negative electrode mixture contains a negative electrode active material as an essential component, and may contain a binder, a conductive agent, a thickener, and the like as an optional component. As the binder and the conductive agent, those exemplified for the positive electrode may be used. For the binder, rubber materials such as a styrene-butadiene copolymer rubber (SBR) may be used. Examples of the thickener include carboxymethylcellulose (CMC) and a modified product thereof (such as Na salts).

The negative electrode active material may contain a carbon material which absorbs and releases lithium ions. Examples of the carbon material absorbing and releasing lithium ions include graphite (natural graphite, artificial graphite), non-graphitizable carbon (soft carbon), and graphitizable carbon (hard carbon). Preferred among them is graphite, which is excellent in stability during charging and discharging and has a small irreversible capacity.

The negative electrode active material may include an alloy based material. The alloy based material is a material including at least one metal capable of forming an alloy with lithium. For the alloy based material, for example, silicon, tin, silicon alloy, tin alloy, silicon compound, and the like are used. For the silicon compound, a composite material having a lithium ion conductive phase and silicon particles dispersed in the phase may be used. As the lithium ion conductive phase, a silicate phase such as a lithium silicate phase, a silicon oxide phase in which 95 mass% or more is silicon dioxide, and/or a carbon phase, may be used.

As the negative electrode active material, the alloy based material and the carbon material can be used in combination. Preferably, for example, 80 mass% or more, or more preferably 90 mass% or more of a total of the alloy based material and the carbon material is the carbon material.

The shape and thickness of the negative electrode current collector can be selected from the shapes and ranges according to the positive electrode current collector. As a metal composing the negative electrode current collector, copper (Cu), nickel (Ni), iron (Fe), and an alloy containing any of these metal elements may be exemplified.

### (Non-aqueous electrolyte)

The non-aqueous electrolyte includes a non-aqueous solvent, and a lithium salt dissolved in the non-aqueous solvent. The non-aqueous electrolyte may include the compound A. Preferably, the lithium salt concentration of the non-aqueous electrolyte is, for example, 0.5 mol/L or more and 2 mol/L or less. With the lithium salt concentration set to be within the above-described range, a non-aqueous electrolyte having an excellent ion conductivity and a suitable viscosity can be prepared. However, the lithium salt concentration is not limited to the above-described concentration.

As the non-aqueous solvent, for example, cyclic carbonates, chain carbonates, cyclic carboxylates, chain carboxylates, or the like are used. Examples of the cyclic carbonate include propylene carbonate (PC), ethylene carbonate (EC), and the like. The cyclic carbonate may include fluorinated cyclic carbonate such as fluoroethylene carbonate (FEC), and cyclic carbonate having a carbon-carbon unsaturated bond such as vinylene carbonate (VC), and vinyl ethylene carbonate. Examples of the chain carbonate include diethyl carbonate (DEC), ethyl methyl carbonate (EMC), dimethyl carbonate (DMC), and the like. Examples of the cyclic carboxylate include γ-butyrolactone (GBL) and γ-valerolactone (GVL). Examples of the chain carboxylate include methyl formate, ethyl formate, propyl formate, methyl acetate, ethyl acetate, propyl acetate, methyl propionate, ethyl propionate, and propyl propionate. The non-aqueous solvent may be used singly or in combination of two or more kinds.

As the lithium salt, known lithium salts may be used. Examples of preferable lithium salts include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, boric acid salts, and imide salts. Examples of the boric acid salts include lithium bisoxalate borate and lithium difluorooxalate borate. Examples of the imide salts include lithium bis(fluorosulfonyl) imide (LiN(FSO₂)₂), lithium bis(trifluoromethanesulfonyl) imide (LiN(CF₃SO₂)₂), lithium trifluoromethanesulfonyl nonafluorobutanesulfonyl imide (LiN(CF₃SO₂) (C₄F₉SO₂)), and lithium bis(pentafluoroethanesulfonyl) imide (LiN(C₂F₅SO₂)₂). The lithium salt may be used singly or in combination of two or more kinds.

### (Separator)

Generally, a separator is interposed between the positive electrode and the negative electrode. The separator has excellent ion permeability and suitable mechanical strength and electrically insulating properties. The separator may be, for example, a microporous thin film, a woven fabric, or a nonwoven fabric. The separator is preferably made of, for example, polyolefin, such as polypropylene and polyethylene.

In an example structure of the non-aqueous electrolyte secondary battery, an electrode group and a non-aqueous electrolyte are accommodated in an outer package, and the electrode group has a positive electrode and a negative electrode wound with a separator interposed therebetween. However, the structure is not limited thereto, and other forms of electrode groups may be used. For example, it can be a laminate electrode group, in which a positive electrode and a negative electrode are laminated with a separator interposed therebetween. The non-aqueous electrolyte secondary batteries may be of any form, for example, a cylindrical type, prismatic type, coin type, button type, laminated type, etc.

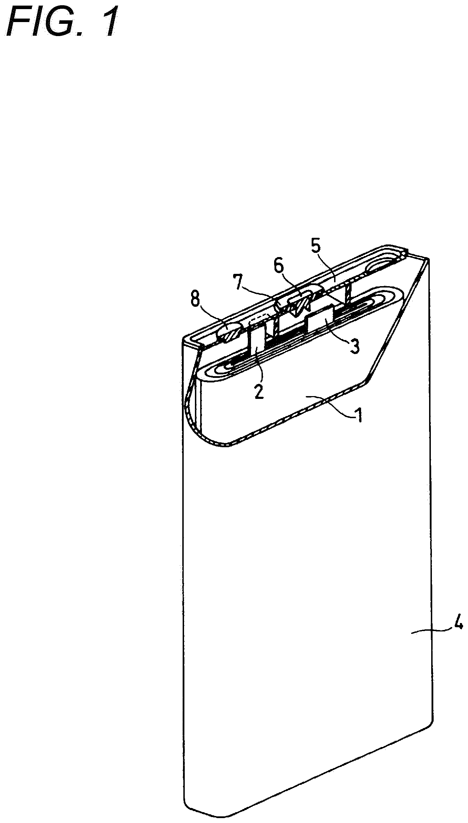

In the following, as an example of a non-aqueous electrolyte secondary battery of the present invention, a structure of a prismatic non-aqueous electrolyte secondary battery is described with reference to FIG. 1.

The battery includes a bottomed prismatic battery case 4, an electrode group 1 and a non-aqueous electrolyte (not shown) accommodated in the battery case 4. The electrode group 1 has a negative electrode in the form of a long strip, a positive electrode in the form of a long strip, and a separator interposed therebetween. The negative electrode current collector of the negative electrode is electrically connected to a negative electrode terminal 6 provided in a sealing plate 5 through a negative electrode lead 3. The negative electrode terminal 6 is insulated from the sealing plate 5 with a resin gasket 7. The positive electrode current collector of the positive electrode is electrically connected to a rear face of the sealing plate 5 through a positive electrode lead 2. That is, the positive electrode is electrically connected to a battery case 4 also serving as a positive electrode terminal. The periphery of the sealing plate 5 is fitted to the open end of the battery case 4, and the fitting portion is laser welded. An injection hole for the non-aqueous electrolyte is provided in the sealing plate 5 and is plugged with a sealing plug 8 after injection.

The present invention will be more specifically described below with reference to Examples and Comparative Examples. However, the present invention is not limited to the Examples below.

### <Examples 1 to 4>

### [Positive electrode intermediate production]

NMP was added to a positive electrode mixture and stirred to prepare a positive electrode slurry. A mixture of positive electrode active material particles, acetylene black (AB), and polyvinylidene fluoride (PVDF) was used for the positive electrode mixture. Layered rock salt type composite oxide particles (average particle size (D50) 4 µm) having a composition of LiNi_{0.35}Co_{0.35}Mn_{0.30}(NCM) was used for the positive electrode active material. In the positive electrode mixture, the mass ratio of the positive electrode active material, AB, and PVDF was set to 100:2:2.

The positive electrode slurry was applied to a surface of an aluminum foil, the applied film was dried, and then rolled to form a positive electrode mixture layer. The positive electrode mixture layer was formed on both sides of the aluminum foil. Furthermore, Al₂O₃ of an island state was allowed to adhere to a surface of the composite oxide particles in the positive electrode mixture layer in a scattered manner by an ALD method (temperature: 120°C, precursor: trimethyl aluminum, oxidizer: H₂O, pressure: a few Torr, 10 cycles). In this manner, a positive electrode intermediate was produced. An atomic ratio at an outermost surface of Al/Ni of the composite oxide particles in the positive electrode intermediate determined by the described method was 2 or less.

### [Negative electrode production]

Water was added to the negative electrode mixture and stirred to prepare a negative electrode slurry. A mixture of artificial graphite (average particle size 20 µm), styrene-butadiene rubber (SBR), and sodium carboxymethylcellulose (CMC) was used for the negative electrode mixture. In the negative electrode mixture, the mass ratio of the artificial graphite, SBR, and CMC was set to 100:1:1. The negative electrode slurry was applied to a surface of a copper foil, and the applied film was dried, and then rolled to prepare a negative electrode having a negative electrode mixture layer formed on both sides of the copper foil.

### [Non-aqueous electrolyte preparation]

To a solvent mixture (volume ratio 2:8) of fluoroethylene carbonate (FEC) and dimethyl carbonate (DMC), LiPF₆ was dissolved, and triallyl phosphate (TP) was further added to produce a non-aqueous electrolyte. The non-aqueous electrolyte had a LiPF₆ concentration of 1 mol /L. The non-aqueous electrolyte contained TP in an amount shown in Table 1.

### [Non-aqueous electrolyte secondary battery production]

To the positive electrode intermediate produced as described above, an Al-made positive electrode lead was attached. To the negative electrode produced as described above, a Ni-made negative electrode lead was attached. In an inert gas atmosphere, the positive electrode intermediate and the negative electrode were wound with a 2-layer structure polyethylene thin film (separator) interposed therebetween into a spiral shape, thereby producing a wound type electrode group. The electrode group was accommodated in a bag-type outer package formed of a laminate sheet including an Al layer, the above-described non-aqueous electrolyte was injected, and then the outer package was sealed, thereby producing a nonaqueous electrolyte secondary battery. Upon accommodating the electrode group in the outer package, a portion of the positive electrode lead and a portion of the negative electrode lead were allowed to be exposed to the outside of the outer package. In the battery, the non-aqueous electrolyte penetrates into the positive electrode mixture layer, and TP adheres to a surface of Al₂O₃ scattered in an island state on a surface of the composite oxide particles to form a cover material. In Table 1, the batteries of Examples 1 to 4 are A1 to A4, respectively.

### <Comparative Example 1>

In the production of the positive electrode intermediate, the surface of the composite oxide particles in the positive electrode mixture layer was not covered with Al₂O₃. In the preparation of the non-aqueous electrolyte, TP was not included in the non-aqueous electrolyte. Except for the above, a battery B 1 was produced in the same manner as in the battery A1 of Example 1.

### <Comparative Example 2>

A battery B2 was produced in the same manner as in the battery A1 of Example 1, except that in the preparation of the non-aqueous electrolyte, TP was not included in the nonaqueous electrolyte.

<Comparative Example 3>

In the production of the positive electrode intermediate, a battery B3 was produced in the same manner as in the battery A2 of Example 2, the surface of the composite oxide particles in the positive electrode mixture layer was not covered with Al₂O₃.

The batteries A1 to A4 of Examples 1 to 4 and the batteries B1 to B3 of Comparative Examples 1 to 3 were evaluated as below.

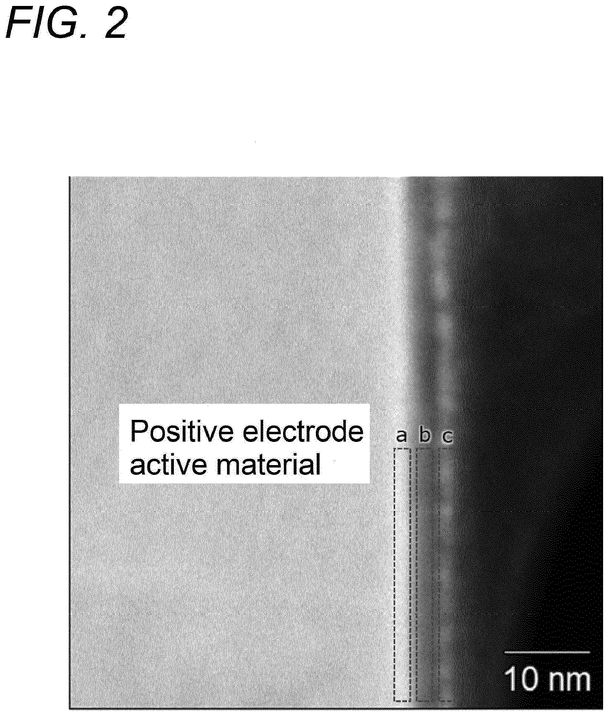

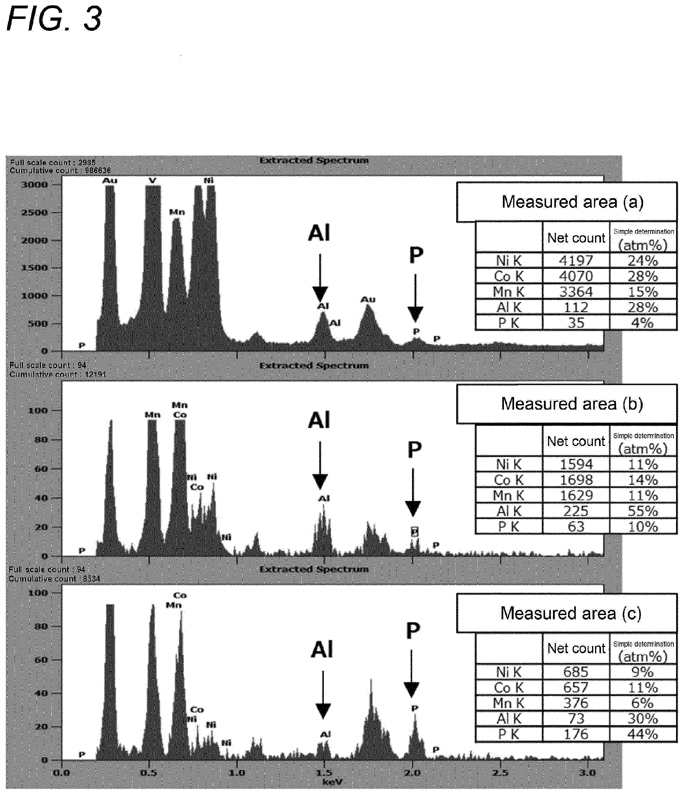

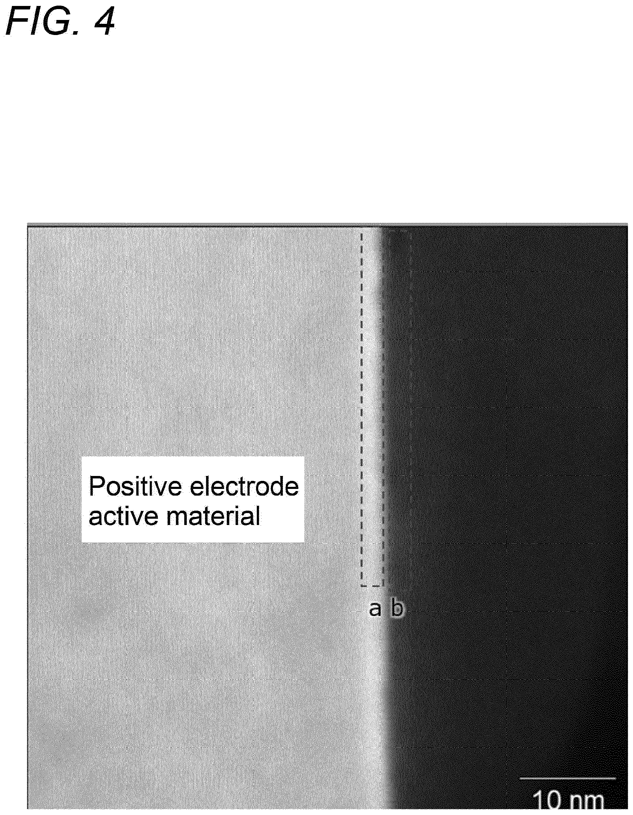

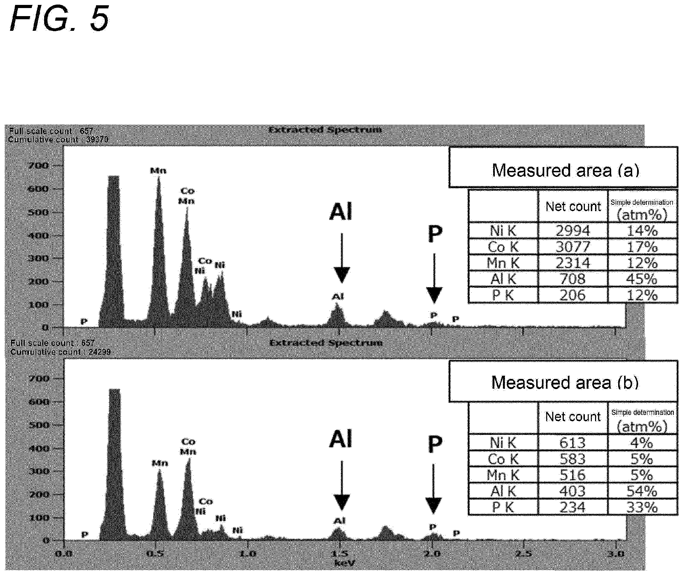

The battery A4 was decomposed, the positive electrode was taken out and washed, and images of cross sections of the positive electrode active material particles were captured. FIG.2 is the captured TEM image of a cross section of a first region of positive electrode active material particles, region (a) showing a surface of a composite oxide, region (b) showing a metal oxide of a cover material, and region (c) showing a phosphorus coating of the cover material. FIG.3 is a diagram showing amounts of phosphorus detected in the first region in an EDX analysis, MO. FIG.4 is a TEM image of a cross section of a second region of the positive electrode active material particles, region (a) showing a surface of the composite oxide, and region (b) showing a region where PDVF is present. FIG.5 is a diagram showing amounts of phosphorus detected in the second region in an EDX analysis, MS.

From images of the cross sections, it was confirmed that on the surface of the composite oxide A (positive electrode active material), the first region (FIG.2) covered with the metal oxide B of an island state (Al₂O₃) was scattered homogeneously, and the second region (FIG.4) where the metal oxide B (Al₂O₃) is mostly not present was also present throughout the surface of the composite oxide A.

As shown in FIG.3, it was confirmed that a large amount of P was present on the surface of the metal oxide B of an island state (region (c)). Meanwhile, as shown in FIG.5, the second region had a relatively small amount of P. With the normalization based on the Al count, the ratio of the P count in the region (c) of FIGs. 2, 3, and the region (b) of FIGs. 4, 5 was 3.47: 1.

### [Evaluation 1: capacity retention rate at 151st cycle]

### (1) First charge/discharge

Constant current charging was performed at a current of 0.2 C until the voltage reached 4.5 V, and then constant voltage charging was performed at a voltage of 4.5 V until the electric current reached 0.05 C. Afterwards, the batteries were subjected to constant current discharging at a current of 0.2 C until the voltage reached 2.5 V. The batteries were allowed to rest for 60 minutes between the charging and discharging. The charge/discharge were conducted under an environment of 25°C.

### (2) Second charge/discharge

Constant current charging was performed at a current of 0.3 C until the voltage reached 4.5 V, and then constant current discharging was performed at a current of 0.5 C until the voltage reached 2.5 V. The batteries were allowed to rest for 10 minutes between the charging and discharging. The charge/discharge were conducted under an environment of 25°C.

### (3) Measurement of capacity retention rate at 151st cycle

One cycle of the above-described first charge/discharge (1), followed by 24 cycles of the above-described second charge/discharge (2) as one set, six sets were performed. That is, in the 1st cycle, 26th cycle, 51st cycle, 76th cycle, 101st cycle, 126th cycle, and 151st cycle, the above-described first charge/discharge (1) was performed. Except for the above cycles, the above-described second charge/discharge (2) was performed. The ratio of the discharge capacity at the first charge/discharge of the 151st cycle relative to the discharge capacity at the first charge/discharge of the 1st cycle was determined as a capacity retention rate at the 151st cycle.

### [Evaluation 2: internal resistance at 101st cycle]

The battery A3 and batteries B1 to B3 were charged to 50% of full charge, after the first charge/discharge of the 101st cycle. Afterwards, constant current discharging was performed for 30 seconds at an electric current I of 0.3 C, and the voltage drop ΔV from the start of discharge to 30 seconds after the start of discharge was measured to calculate the ΔV/I as an internal resistance.

### [Evaluation 3: metal elution at 151st cycle]

After the evaluation 1, the battery was decomposed, and the 2-layer structure polyethylene thin film (separator) and the negative electrode were taken out. The negative electrode side of the 2-layer structure polyethylene thin film was removed, and a total amount of the metal derived from the positive electrode active material included therein, and the metal derived from the positive electrode active material in the negative electrode was measured as a metal elution amount from the positive electrode, and the mass ratio (ppm) relative to the positive electrode active material included in the positive electrode was determined.

The evaluation results are shown in Table 1.

**[Table 1]**

| Batter y | TP Content (mass%) of nonaqueous electrolyte (when prepared) | Cover material covering positive electrode mixture layer surface | | Capacity retention rate at 151st Cycle (%) | Internal resistance at 101st Cycle (Ω) | Metal elusion |
|---|---|---|---|---|---|---|
| | | Metal oxide | Compoun dA | | | |
| A1 | 0.25 | Al₂O₃ | TP | 91.6 | - | - |
| A2 | 0.5 | Al₂O₃ | TP | 89.6 | - | 803 |
| A3 | 1.25 | Al₂O₃ | TP | 91.9 | 1.5 | - |
| A4 | 2 | Al₂O₃ | TP | 90.4 | - | 643 |
| B1 | 0 | - | - | 85.0 | 2.0 | 2697 |
| B2 | 0 | Al₂O₃ | - | 88.5 | 1.3 | 1370 |
| B3 | 0.5 | - | TP | 83.2 | 4.8 | 1663 |

The batteries A1 to A4 achieved higher capacity retention rates than those of the batteries B 1 to B3. In the battery B 1, the cover material was not formed on the surface of the composite oxide A, and therefore the non-aqueous electrolyte made contact with the composite oxide particles, and side reactions and metal elusion occurred, and the capacity retention rate decreased. In the battery B2, the surface of the composite oxide A was covered with Al₂O₃, but the phosphorus coating was not formed, and therefore the capacity retention rate decreased. In the battery B3, the surface of the composite oxide A was covered with TP, but the surface of the composite oxide A was not covered with Al₂O₃, and therefore the internal resistance (positive electrode resistance) increased, and the capacity retention rate decreased. In the battery A3, the TP content was more than that of the battery B3, but the surface of the composite oxide A was covered with the cover material, and therefore the internal resistance (positive electrode resistance) decreased than that of the battery B3.

### [Industrial Applicability]

The non-aqueous electrolyte secondary battery according to the present invention is suitably used as, for example, a power supply of a mobile device such as a smart phone, a power source of a vehicle such as an electric vehicle, or a storage device of natural energy such as sunlight.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A non-aqueous electrolyte secondary battery comprising a positive electrode, a negative electrode, and a non-aqueous electrolyte, wherein
the positive electrode has a positive electrode mixture including positive electrode active material particles,
the positive electrode active material particles include a composite oxide containing lithium and a transition metal, and a cover material covering at least a portion of a surface of the composite oxide, and
the cover material includes a metal oxide, and a phosphorus compound covering at least a portion of a surface of the metal oxide.

2. The non-aqueous electrolyte secondary battery of claim 1, wherein the surface of the composite oxide has a first region covered with the metal oxide of an island state, and a second region other than the first region.

3. The non-aqueous electrolyte secondary battery of Claim 1 or 2, wherein the first region is scattered at the surface of the composite oxide.

4. The non-aqueous electrolyte secondary battery of any one of claims 1 to 3, wherein an amount of phosphorus detected at the surface of the metal oxide, MO, and an amount of phosphorus detected in the second region, MS, satisfies a relation MO > MS.

5. The non-aqueous electrolyte secondary battery of claim 4, wherein a relation MO > 3MS is satisfied.

6. The non-aqueous electrolyte secondary battery of any one of claims 1 to 5, wherein the metal oxide includes at least one element selected from the group consisting of aluminum, silicon, titanium, magnesium, zirconium, niobium, germanium, calcium, and strontium.

7. The non-aqueous electrolyte secondary battery of any one of claims 1 to 6, wherein the composite oxide has a layered rock salt type structure, and includes Ni, Co, and at least one of Al and Mn.

8. The non-aqueous electrolyte secondary battery of claim 7, wherein at an outermost surface of the positive electrode mixture, an atomic ratio of a metal derived from the metal oxide relative to Ni derived from the composite oxide is 2 or less.

9. The non-aqueous electrolyte secondary battery of any one of claims 1 to 8, wherein the non-aqueous electrolyte includes a phosphate compound, and the phosphate compound has at least one alkenyl group in one molecule.

10. The non-aqueous electrolyte secondary battery of claim 9, wherein the non-aqueous electrolyte has a content of the phosphate compound of 2 mass% or less.

11. The non-aqueous electrolyte secondary battery of claim 9 or 10, wherein the alkenyl group includes at least one selected from the group consisting of a vinyl group, a 1-propenyl group, a 2-propenyl group, an isopropenyl group, a 1-butenyl group, a 2-butenyl group, and a 3-butenyl group.

12. The non-aqueous electrolyte secondary battery of any one of claims 9 to 11, wherein the phosphate compound includes triallyl phosphate.

13. A method for producing a non-aqueous electrolyte secondary battery, the non-aqueous electrolyte secondary battery including a positive electrode, a negative electrode, and a non-aqueous electrolyte, and the method including the steps of:
(1A) forming a positive electrode mixture layer including a composite oxide containing lithium and a transition metal on a surface of a positive electrode current collector,
(1B) allowing a metal oxide to adhere to at least a portion of a surface of the composite oxide in the positive electrode mixture layer to produce a positive electrode intermediate, and
(2) bringing a phosphate compound into contact with a surface of the metal oxide to form a cover material including the metal oxide, and a phosphorus compound covering at least a portion of a surface of the metal oxide, to produce a positive electrode.

14. The method for producing a non-aqueous electrolyte secondary battery of claim 13, wherein in the step of producing the positive electrode intermediate, the metal oxide is allowed to adhere to the surface of the composite oxide by at least one method selected from the group consisting of a wet method, a spray coating method, a dip coating method, a chemical vapor deposition (CVD) method, an atomic layer deposition (ALD) method, and a sputtering method.

15. A method for producing a non-aqueous electrolyte secondary battery, the non-aqueous electrolyte secondary battery including a positive electrode, a negative electrode, and a non-aqueous electrolyte, and the method including the steps of:
(1a) allowing a metal oxide to adhere to at least a portion of a surface of a composite oxide containing lithium and a transition metal,
(1b) forming a positive electrode mixture layer including the composite oxide to which the metal oxide is adhered on a surface of a positive electrode current collector to produce a positive electrode intermediate, and
(2) bringing a phosphate compound into contact with a surface of the metal oxide to form a cover material including the metal oxide, and a phosphorus compound covering at least a portion of a surface of the metal oxide, to produce a positive electrode.

16. The method for producing a non-aqueous electrolyte secondary battery of claim 15, wherein the step of allowing the metal oxide to adhere is performed by at least one method selected from the group consisting of a wet method, a spray coating method, a dip coating method, a chemical vapor deposition (CVD) method, and a sputtering method.
